(19) Europäisches Patentamt
European Patent Office
Office européen des brevets

(11) EP 0 399 644 B1

(12) **EUROPEAN PATENT SPECIFICATION**

(45) Date of publication and mention of the grant of the patent:
**24.01.1996 Bulletin 1996/04**

(51) Int. Cl.$^6$: **A23L 3/34**, A23B 7/14, A23B 7/10, A23B 4/12, A23B 4/14, A01N 3/02

(21) Application number: **90303841.2**

(22) Date of filing: **10.04.1990**

(54) **Preservative for plants**
Konservierungsmittel für Pflanzen
Agents conservateurs pour plantes

(84) Designated Contracting States:
**BE CH DE DK ES FR GB IT LI NL SE**

(30) Priority: **10.04.1989 JP 90379/89**
**15.08.1989 JP 209666/89**

(43) Date of publication of application:
**28.11.1990 Bulletin 1990/48**

(60) Divisional application : **93106348.1**

(73) Proprietor: **KYOWA HAKKO KOGYO CO., LTD.**
**Chiyoda-ku, Tokyo (JP)**

(72) Inventors:
- **Yamamoto, Kazuhiro**
  **Machida-shi, Tokyo (JP)**
- **Yoshioka, Noriko**
  **Yokohama-shi Kanagawa-ken (JP)**
- **Furukawa, Tadayasu**
  **Chesterfield MO 63017 (US)**

(74) Representative: **Cresswell, Thomas Anthony et al**
**London WC1R 5LX (GB)**

(56) References cited:

| | |
|---|---|
| EP-A- 0 261 422 | WO-A-88/02602 |
| CH-A- 233 509 | DE-A- 1 924 156 |
| DE-A- 2 540 710 | DE-A- 2 641 676 |
| DE-C- 881 299 | GB-A- 1 122 662 |
| GB-A- 1 521 912 | US-A- 4 301 185 |

- **Food Technology, vol. 43, no. 1, 1989, p. 140, col. 2, par. 2**
- **Dictionary of Organic Compounds, 5th Edition, vol. 3, p. 2903, col. 2, l. 7, 8, 1982**
- **Patent Abstracts of Japan, vol. 7, no. 201 (C-184)(1346), 6 September 1983**
- **Patent Abstracts of Japan, vol. 13, no. 260 (C-607)(3608), 15 June 1989**
- **Chemical Abstracts, vol. 110, no. 23, 5 June 1989, p. 279, abstract no. 207726b, Colombus, Ohio, US; CH. Mei et al.: "Green preservation effects of 4Pu-30 on rice leaves" & Zhiwu Shengliyue Tongxun 1989, no. 1, pp. 17-19 (cat. X)**
- **Chemical Abstracts, vol. 107, December 1987, p. 485, abstract no. 233257g, Colombus, Ohio, US; L. Iliev et al.: "Influence of some purine and phenylurea cytokinins and atrazine on the photochemical and photosynthetic activity in aging radish leaves (Raphanus sativus L.)" & Acta Univ. Agric., Fac. Agron. (Brno) 1985, vol. 33, no. 3, pp. 449-451**
- **Chemical Abstracts, vol. 77, no. 3, 17 July 1972, p. 418, abstract no. 18427u, Colombus, Ohio, US; & JP-A-7116504 (Kyowa Fermentation Industry Co. Ltd.) 07.05.1971**
- **Chemical Abstracts, vol. 82, no. 3, 20 January 1975, abstract no. 11663n, Colombus, Ohio, US; M.L. Fields: "Effect of diplicolinate on vegetative cells of Bacillus" & J. Food Sci. 1974, vol. 38, no. 7, pp. 1166-1168**
- **Chemical Abstracts, vol. 70, no. 17, 28 April 1969, p. 36, abstract no. 74583j, Colombus, Ohio, US; K. Tochikubo et al.: "Properties of glucose dehydrogenase from vegetative cells of Bacillus subtilis and effect of dipicolinic acid and its chemical analogs on the enzyme" & Jpa. J. Microbiol. 1968, vol. 12, no. 4, pp. 435-440**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Rank Xerox (UK) Business Services
2.9.7/3.4

- **Chemical Abstracts, vol. 96, no. 17, 26 April 1982, p. 474, abstract no. 139757c, Colombus, Ohio, US; C.F. Forney et al.: "Effects of amino and sulfhydryl reactive agents on respiration and ethylene production in tomato and apple fruit disks" & Physiol. Plant. 1982, vol. 54, no. 3, pp. 329-333**
- **Chemical Abstracts, vol. 98, no. 7, 14 February 1983, abstract no. 50525u, Colombus, Ohio, US; M.L. Tabachnik et al.: "Free sulfhydryl groups in ripening fruits" & Plant Cell Physiol. 1982, vol. 23, no. 8, pp. 1309-1314**
- **Chemical Abstracts, vol. 88, no. 7, 13 February 1978, p. 167, abstract no. 46245d, Colombus, Ohio, US; M.V. Rao et al.: "Prolonging storage life of betel leaves" & Indian J. Hortic. 1977, vol. 34, no. 2, pp. 175-182**
- **Chemical Abstracts, vol. 84, no. 8, January 1976, p. 119, abstract no. 1163b, Colombus, Ohio, US; CH. Frenkel: "Role of auxin in the hormonal regulation of fruit ripening" & Proc. Int. Hortic. Congr., 19th 1974 (Pub. 1975), vol. 2, pp. 103-118**


Remarks:

The file contains technical information submitted after the application was filed and not included in this specification

## Description

The present invention relates to a preservative for plants, in particular fruits, vegetables and cut flowers after being harvested.

Known conventional active ingredients for keeping fruits and vegetables fresh after being harvested include, as active ingredients intended for keeping freshness of fruits and vegetables in general, e.g. organic or inorganic germanium (JP-A-293,338/86), biochemical energy source substances, such as sugar phosphate, amino acid phosphate, amidophosphate, hydroxy acid phosphate, adenosine phosphate, guanosine phosphate and creatine phosphate (JP-A-257,371/87), kojic acid (JP-A-198,372/87), extracts from Chlorella with hot water, and tocopherol and/or lecithin (JP-A-171,641/87), oligosaccharides (JP-A-214,120/88), vitamin C, salts of vitamin C and/or esters of vitamin C, and gallic acid, or its derivatives (JP-A-22,138/88) and, as active ingredients intended for foods containing fruits and vegetables, lysozyme, ascorbic acid, glucose, and glucose oxidase (JP-A-143,672/87), chitin oligosaccharides, N-acetylglucosamine, glucosamine, salts of glucosamine and salts of chitosan (JP-A-39,569/88), hinokithiol included with cyclodextrin (JP-A-240,765/88), hexose phosphate ferrous salt, or divalent iron compound and hexose phosphate (JP-A-251,073/88) and, as active principles intended for fruits in general, calcium acetate and calcium lactate and/or sodium acetate (JP-A-143,635/87) and coffee bean cakes (JP-A-133,938/88) and, as active ingredients intended for strawberries, organic acids, such as malic acid, tartaric acid, lactose and sucrose, (JP-A-41,255/77) and, as active ingredients intended for pears, basic amino acids and vitamin C (JP-A-6,341/80) and, as an active ingredient intended for pineapples, gibberellin (JP-A-231,944/86).

On the other hand, known active ingredients for keeping cut flowers fresh include, e.g. silver thiosulfate, aluminum sulfate, 8-hydroxyquinoline sulfate and sugar (Nosanbutsu Ryutsu Gijyutsu Nenpo (Annual Report of Distribution Techniques for Agricultural Products), pp. 110-112 (1987)) and, as active principles intended for roses, metabolic sugars and phosphonic acids (JP-A-61,401/89), di- or trivalent basic organic carboxylic acids, and alkali salts thereof (JP-A-131,847/74), kinetin and 6-benzyladenine, which are a substance possessing a cytokinin activity (Science, <u>125</u> 650-651, 1957, Plant & Cell Physiology <u>7</u> 705-706, 1966, Hortscience <u>8</u> 496-497, 1973), antiseptic/disinfectant (boric acid, chloride of lime, benzoic acid, salicylic acid, sorbic acid, dehydroacetic acid, propionic acid, isocyanuric acid, chlorous acid, hypochlorous acid, paraoxybenzoic acid, and esters thereof, lauryl trimethyl ammonium-2,4,5-trichloro-carbonilide, tribromosalicylateanilide, 3,4,4'-trichlorocarbonilide, hexachlorophene, bithionol, chloramine T and chloramine B halazon), nitrogen-containing compounds (urea, ammonium sulfate, ammonium chloride, ammonium carbamate, guanidine, alanine, glycine, chlorophyll and sodium nitrilo triacetate), phosphorus-containing compounds (polyphosphates, such as sodium tripolyphosphate and potassium pyrophosphate and orthophosphate salts, such as monobasic sodium, monobasic potassium, monoammonium and dibasic sodium, dibasic potassium, and diammonium hydrogen phosphates), surface-active agents (anionic, cationic, or nonionic surface-active agents), inorganic builders (sodium carbonate, potassium carbonate and ammonium carbonate, potassium sulfate), organic builders (citric acid, succinic acid, malic acid, tartaric acid, and gluconic acid and sodium salts thereof, pottasium salts thereof and ammonium salts thereof), solvents (monovalent or polyvalent lower alcohols, such as ethanol, propylene glycol and glycerol, (JP-A-24,750/74), 2-pyridinethiol-1-oxide (JP-A-98,001/84), ascorbic acid, isoascorbic acid, tryptophan, and thiourea (USP 3,320,046), kojic acid (JP-A-198,372/87), polylysine or its salts (JP-A-169,701/87) gallic acid or its derivatives (JP-A-22,138/88), and coffee bean cakes (JP-A-133,938/88).

At present, as preservatives for cut flowers, there are also customarily employed preservatives whose active ingredient is silver thiosulfate. However, such preservations cause problems of environmental pollution because the silver included is a heavy metal. In addition, flowers to which the agents may be effectively applied are limited to only some types of flowers, such as carnation. Therefore, recently the development of a preservative demonstrating a general effect and which does not contain heavy metals has been desired.

It is known to employ *cis*-propenylphosphonic acid as a synthetic precursor of phosphomycin which is an antibiotic (J. of Organic Chemistry <u>35</u> 3510-3512, 1970). In addition, 2,5-norbornadiene and *cis*-2-butene, which are structural analogues of the *cis*-olefin compounds represented by the general formula (I), have been used as materials for the study of plant-aging (Phytochemistry <u>23</u> 2765-2768, 1984, PHYSIOLOGIA PLANTARUM <u>63</u> 114-120, 1985). These compounds are gases at normal temperature under normal pressure, so that they are not practical.

JP-A-1/61401 describes preservatives for extending the life of cut roses containing metabolic sugars and phosphonic acid or analogues thereof. Examples of analogues of phosphonic acid which may be used include phenylphosphonic acid, phenylphosphonic acid dialkyl ester, 2-carboxyethyl-phosphonic acid and 2-aminoethylphosphonic acid.

The present invention provides for the use of preservatives which show an excellent effect on harvested plants or parts thereof.

The present invention relates to use of a composition comprising as active ingredient at least one compound which is an olefin of formula (I), or a salt or ester thereof:

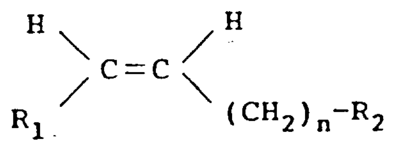

(I)

wherein $R_1$ is an alkyl group having from 1 to 3 carbon atoms or a phosphono group, $R_2$ is a phosphono group, and n is 0 or an integer of 1 to 3, as a harvested plant preservative.

The present invention provides excellent preservatives capable of keeping plants fresh for a long time after being harvested, in particular fruits, vegetables, and cut flowers. For example, the composition of the invention inhibits yellowing of fruit and vegetables, and prevents phenomena, such as withering, blossom-falling and drooping of cut flowers, so that the vase life of flowers is extended. Particularly for roses the composition retards flower opening, which results in extension of the vase life.

Fig. 1 is a figure wherein the change of the stage in the flower opening of cut rose flowers is expressed by numerical symbols, and Fig 2 shows the change of the stage in the flower opening of cut flowers tested in Example 3 against the number of days, Fig 3 shows the change of the weight % of cut flowers tested in Example 3 due to water uptake, Fig. 4 shows the change in the water uptake (g/cut flower weight-g) by cut flowers tested in Example 3 against the number of days, Fig. 5 shows the change of the stage in the flower opening of cut flowers tested in Example 4 against the number of days, Fig. 6 shows the change of weight % of cut flowers tested in Example 4 against the number of days, Fig. 7 shows the change in water uptake (g/cut flower weight-g) by cut flowers tested in Example 4 against the number of days, Fig. 8 shows the change of the stage in the flower opening of cut flowers tested in Example 5 against the number of days, Fig. 9 shows the change of the stage in the flower opening of cut flowers tested in Example 6 against the number of days and Fig. 10 shows the change in weight % of cut flowers tested in Example 6 against the number of days.

The olefin compounds represented by the general formula (I) include propenyl-1-phosphonic acid, 2-butenylphosphonic acid, 1-butenylphosphonic acid, 1-pentenylphosphonic acid, 1,2-diphosphonoethylene and propenyl-1,3-diphosphonic acid. These compounds include the cis- and trans-forms and their mixture, any of which can be used. In particular, *cis*-propenylphosphonic acid is preferred. The alkali metal salts (for example sodium salts and potassium salts) or alkyl esters (for example methyl esters and ethyl esters) of the compounds represented by the general formula (I) can also be used.

All of the above-described active ingredients are known compounds, and are in the form of solids at normal temperature under normal pressure. For example, *cis*-propenylphosphonic acid represented by the general formula (I) is disclosed in JP-A-40,629/80 and in JP-A-52,299/83.

The active ingredient is employed in the form of a solution of various concentrations. Each concentration is not particularly limited since the optimum concentration differs depending on the type of plants to be treated.

The concentration of olefin compounds represented by the formula (I), or salts thereof or esters thereof in a solution is typically in the range of from 0.001 to 5 weight %. It is preferred that the concentration used is in the range of 0.1 to 2 weight % for application to fruit and vegetables, and 0.01 to 1 weight % for application to cut flowers.

The compound of formula (I) or the salt or ester thereof can be used by being dissolved in a solvent, such as water and alcohols that can dissolve it. It is preferred that they are used in the form of an aqueous solution.

As plants to which the preservatives of the present invention can be applied, examples of fruit and vegetables include cabbage, lettuce, broccoli, asparagus, spinach, bean sprouts, burdock, corn, carrot, cauliflower, Brussels sprouts, bamboo shoots, parsley, broad bean, celery, green pepper, turnip, tomato, eggplant, cucumber, mushrooms, champignon, kabosu (Citrus sphaerocarpa Tanaka), sudachi, apple, pear, tangerine, strawberry, peach, pineapple, banana, grape, melon and avocado and examples of cut flowers and potted plants include carnation, sweetpea, gypsophila, gerbera, rose, chrysanthemum for example spring chrysanthemum, lily, stock, statice, gentian, gladiolus, Turkish bellflower, tulip and orchid.

There are several methods of applying the preservative of the present invention. For example, the cut face or the whole of a plant to be treated may be immersed in, or sprayed with, the preservative itself or a solution containing this agent. In case the present preservative is used for pre-treatment, the immersing time is preferably for 1 to 20 hrs.

In a range so as not to spoil effects of the above-described active ingredient, other known preservatives can be added therein as necessary for use.

EXAMPLES

Example 1

Effect of preservative on yellowing of broccoli

Commercial broccoli was cut into 5 to 10 g small pieces. With buds facing down, 5 pieces each were put in 1 liter-beakers respectively containing 200 ml of 0.1 weight % aqueous *cis*-propenylphosphonic acid solution (test group 1); 1 weight % aqueous *cis*-propenylphosphonic acid solution (test group 2); and tap water (control group 1), followed by immersion therein for 1 hour.

After the test solution was removed gently, the pieces in each group were allowed to stand for 2 days in a 10-liter desiccater (a tray filled with water was placed therein).

The change in the color of the buds was observed by naked eye. In addition, by measuring with a colorimeter the lightness (L) and chroma of the broccoli (a: green to red, b: blue to yellow) before and after they were allowed to stand, the difference in color before and after being allowed to stand was calculated therefrom and can be regarded as a measure of green-fading and yellowing.
(The higher ΔE indicates the progress of green-fading and yellowing. However, since the value is affected by lightness and chroma of the plants before the test, it is regarded as a measure of change in the color of the buds for the Example only.)

$$\Delta E = \{(\Delta L)^2 + (\Delta a)^2 + (\Delta b)^2\}$$

| | |
|---|---|
| ΔE; | difference in the color of the broccoli buds between before and after being allowed to stand |
| ΔL; | difference in the "L" value between before and after being allowed to stand |
| Δa; | difference in the "a" value between before and after being allowed to stand |
| Δb; | difference in the "b" value between before and after being allowed to stand |

The results are shown in Table 1.

Table 1

| Test group and control group | After 2 days | |
|---|---|---|
| | Appearance | ΔE* |
| Test group 1<br>a 0.1 weight % aqueous *cis*-propenylphosphonic acid solution | Yellowing to some extent | 6.3±0.8 |
| Test group 2<br>an 1 weight % aqueous *cis*-propenylphosphonic acid solution | Little yellowing Keeping green considerably | 4.5±1.0 |
| Control 1<br>Tap water | Complete yellowing | 9.0±1.8 |

* Average ± Standard Deviation

Example 2

Preventive effect on withering of cut carnation flower

Carnations (*Dianthus caryophyllus* L. cv. Coral) were cut in water to lengths of 30 cm, immediately after harvest. The stems of the nine flowers were immersed, in 200-ml Erlenmeyer flasks respectively containing 100 ml each of a 0.01 weight % aqueous *cis*-propenylphosphonic acid solution (test group 1); a 0.1 weight % aqueous *cis*-propenylphosphonic acid solution (test group 2); and tap water (control group 1). Then, they were allowed to stand at room temperature, and the degree of withering was observed with the naked eye daily. The results are shown in Table 2.
(Since the results are affected by some conditions, such as harvesting time of plants examined before the test, the

degree of the withering progress is regarded as a measure for the Example only.)

Table 2

| Test group and control group | Days | | | | |
|---|---|---|---|---|---|
| | 0 | 4 | 8 | 12 | 16 |
| Test group 1<br>a 0.01 weight % aqueous *cis*-propenyl-phosphonic acid solution | - | - | - | - | + |
| Test group 2<br>a 0.1 weight % aqueous *cis*-propenyl-phosphonic acid solution | - | - | - | - | - |
| Control group 1<br>tap water | - | ± | + | ++ | +++ |

-: No withering, ±: Start of a little withering,
+: Obvious withering, ++: Almost complete withering,
+++: Putrefaction in addition to withering

Example 3

Effect on prolonging the life of cut roses

Roses (*Rosa hibrida* L. cv. Sonia) were cut in water to lengths of 30 cm, immediately after harvest at the bud stage Each cut flower was put in 61 ml-test tubes respectively containing 30 ml each of a 0.01 weight % aqueous *cis*-propenylphosphonic acid solution (test group 1); an aqueous mixture solution of 0.01 weight % *cis*-propenylphosphonic acid and 3 weight % sucrose (test group 2), tap water (control group 1) and a commercial preservative for cut flowers (a vase treatment agent "Hana no Sei" (Flower Sprite) made by Palace Chemical Corp., control group 2), to immerse its stem therein.

The cut flowers were allowed to stand in a room where the temperature and the relative humidity were adjusted to 20°C, 70 %, respectively, and the stage in the flower opening and the external appearance of the flowers were observed by the naked eye every day. In addition, the weight of the cut flowers and the water uptake were measured.

The stage in the flower opening, as shown in Fig. 1, is expressed as numerical symbols, from the stage of the bud. The number in Fig. 1 indicates the stage in the flower opening. In the drawings, *1 means that the flower opened too much (including an exposed style of the flower), and *2 means that the flower opened too much more than stage 7.

As for prolonging the life of the flower flowers were judged to lose their ornamental value (the end point of flower) when two or more of the five cut flowers tested opened too much (including an exposed style of the flower), dropped petals, withered, or drooped or showed a harmful effect due to the chemical, at which point the observation and measurements were stopped. The results are shown in Figs. 2, 3 and 4. The data in the figures in the drawings show mean values of five cut flowers.

Example 4

Effect on prolonging the life of cut roses

Roses (*Rosa hibrida* L. cv. Sonia) were cut in water to lengths of 30 cm, immediately after being harvested in the bud stage. Each cut flower was put in 61 ml-test tubes respectively containing 30 ml of a 0.01 weight % aqueous *cis*-propenylphosphonic acid solution (test group 1); a 0.05 weight % aqueous *cis*-propenylphosphonic acid solution (test group 2); or an aqueous mixture solution of 0.05 weight % *cis*-propenylphosphonic acid and 5 weight % sucrose (test group 3); and tap water (control group) to immerse the stem of the respective flowers for 20 hours therein.

Five cut flowers were employed for each test group. All of the cut flowers were taken out of the immersing solution, and each flower transferred to a 61 ml-test tube containing 30 ml of tap water, to immerse the stem. The same characteristics as in Example 3 were measured.

The above procedures were carried out in a room where the temperature and the relative humidity were adjusted to 20°C and 70 %, respectively.

Results are shown in Figs. 5, 6, and 7. The data shown in the Figs. are mean values.

Example 5

Effect on prolonging the life of cut roses

Carina (*Rosa hibrida* L.) was employed as a cultivar of rose flower. The procedure was carried out in the same manner as in Example 4 except for the use of a 0.01 weight % aqueous solution (test group 1), a 0.05 weight % aqueous *cis*-propenylphosphonic acid solution (test group 2), and tap water (control group 1) and the procedure was carried out in the same manner as in Example 3 except for the use of a commercial preservative (a vase treatment agent "Hana no Sei" (Flower Sprite), as control group 2.

The results are shown in Fig. 8. The data in the figure indicate mean values of five cut flowers.

Example 6

Effect on prolonging the life of cut roses

The procedure was carried out in the same manner as in Example 3 except for the use, as a test group, of a 0.05 weight % aqueous *cis*-propenylphosphonic acid solution (test group 1), and the uses, as control groups, of tap water (control group 1), a 0.01 weight % aqueous phenylphosphonic acid solution (control group 2), and a 0.05 weight % aqueous phenylphosphonic acid solution (control 3).

The results are shown in Figs. 9 and 10. The data indicated in the figures are mean values of five cut flowers.

Example 7

Extended effect on vase life of cut tulip flowers

Commercially available tulips (type: pink supreme) were cut in water to lengths of 50 cm.

Each cut flower was put in a 61 ml-test tube respectively containing 30 ml each of an aqueous mixture solution of 0.1 weight % *cis*-propenylphosphonic acid (test group) and tap water (control group). Three cut flowers were used for both the test group and the control group.

Thereafter all the cut flowers were allowed to stand in the same room with the temperature and the relative humidity controlled at 20°C and 70% respectively. The appearance of each cut flower (petals, stems, etc.) was observed with the naked eye every day.

The results are shown in Table 3.

Table 3

| Test group and control group | Days | | | | |
|---|---|---|---|---|---|
| | 0 | 2 | 4 | 6 | 8 |
| Test group<br>0.1 weight % aqueous *cis*-propenylphosphonic acid solution | Normal | Normal | Normal | Normal | Normal |
| Control group<br>Tap water | Normal | Normal | A bit bowing of stems | Bowing of stems, fallen petals | -* |

-*: Measurement ended at the sixth day, therefore no results are available.

## Claims

1. Use of a composition comprising as active ingredient at least one compound which is an olefin of formula (I), or a salt or ester thereof:

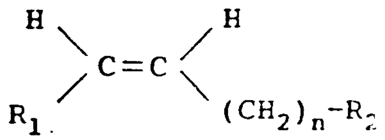

(I)

wherein $R_1$ is an alkyl group having 1 to 3 carbon atoms or a phosphono group, $R_2$ is a phosphono group, and n is 0 or an integer of 1 to 3, as a harvested plant preservative.

2. Use according to claim 1, wherein the olefin of formula (I) is propenyl-1-phosphonic acid, 2-butenylphosphonic acid, 1-butenylphosphonic acid, 1-pentenylphosphonic acid, 1,2-diphosphono-ethylene or propenyl-1,3-diphosphonic acid.

3. Use according to claim 1 or 2, wherein the salt of the olefin of formula (I) is an alkali metal salt.

4. Use according to claim 3, wherein the alkali metal is sodium or potassium.

5. Use according to any one of the preceding claims, wherein the ester of the olefin of formula (I) is an alkyl ester.

6. Use according to claim 5, wherein the alkyl ester is methyl ester or ethyl ester.

7. Use according to claim 1 wherein the preservative employed is a solution containing 0.001 to 5 wt% of an olefin of formula (I) or a salt or ester thereof.

8. Use according to claim 7, wherein the solution contains 0.1 to 2wt% of a compound of formula (I) or a salt or ester thereof.

9. Use according to claim 7 or 8 wherein the preservative employed is a solution of propenyl phosphonic acid.

10. Use according to claim 9 wherein the preservative employed is a solution of cis-propenylphosphonic acid.

## Patentansprüche

1. Verwendung einer Zusammensetzung, die als aktive Komponente wenigstens eine olefinische Verbindung mit der Formel (I), ein Salz oder einen Ester davon enthält:

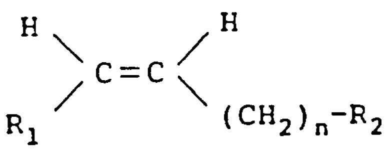

(I)

wobei $R_1$ eine Alkyl-Gruppe mit 1 bis 3 Kohlenstoffatomen oder eine Phosphono-Gruppe ist, $R_2$ eine Phosphono-Gruppe ist und n 0 oder eine ganze Zahl von 1 bis 3 ist als Konservierungsmittel für geerntete Pflanzen.

2. Verwendung gemäß Anspruch 1 wobei die olefinische Verbindung mit der Formel (I) Propenyl-1-phosphonsäure, 2-Butenylphosphonsäure, 1-Butenylphosphonsäure, 1-Pentenylphosphonsäure, 1,2-Diphosphono-ethylen oder Propenyl-1,3-diphosphonsäure ist.

3. Verwendung gemäß Anspruch 1 oder 2, bei der das Salz der olefinischen Verbindung mit der Formel (I) ein Alkalimetallsalz ist.

4. Verwendung gemäß Anspruch 3, wobei das Alkalimetall Natrium oder Kalium ist.

5. Verwendung nach einem der vorstehenden Ansprüche, wobei der Ester der olefinischen Verbindung mit der Formel (I) ein Alkylester ist.

6. Verwendung gemäß Anspruch 5, wobei der Alkylester ein Methyl- oder Ethylester ist.

7. Verwendung gemäß Anspruch 1, wobei das verwendete Konservierungsmittel eine Lösung enthaltend 0,001 bis 5 Gew.-% einer olefinischen Verbindung mit der Formel (I) oder deren Salz oder deren Ester ist.

8. Verwendung gemäß Anspruch 7, wobei die Lösung 0,1 bis 2 Gew.-% einer Verbindung mit der Formel (I) oder deren Salze oder Ester enthält.

9. Verwendung gemäß Anspruch 7 oder 8, wobei das verwendete Konservierungsmittel eine Propenylphosphonsäure-Lösung ist.

10. Verwendung gemäß Anspruch 9, wobei das verwendete Konservierungsmittel eine Lösung von cis-Propenylphosphonsäure ist.

## Revendications

1. Utilisation d'une composition comprenant comme ingrédient actif au moins un composé qui est une oléfine de la formule (I), ou son sel ou ester :

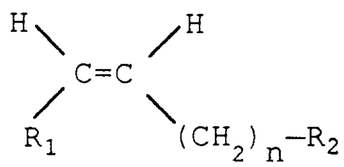

(I)

où $R_1$ est un groupe alkyle ayant 1 à 3 atomes de carbone ou un groupe phosphono, $R_2$ est un groupe phosphono et n est 0 ou un nombre entier de 1 à 3, en tant que conservateur de plantes ceuillies.

2. Utilisation selon la revendication 1 où l'oléfine de formule (I) est l'acide propényl-1-phosphonique, l'acide 2-buténylphosphonique, l'acide 1-buténylphosphonique, l'acide 1-penténylphosphonique, le 1,2-diphosphono-éthylène ou l'acide propényl-1-1,3-diphosphonique.

3. Utilisation selon la revendication 1 ou 2, où le sel de l'oléfine de formule (I) est un sel de métal alcalin.

4. Utilisation selon la revendication 3 où le métal alcalin est le sodium ou le potassium.

5. Utilisation selon l'une quelconque des revendications précédentes où l'ester de l'oléfine de formule (I) est un ester alkylique.

6. Utilisation selon la revendication 5 où l'ester alkylique est l'ester méthylique ou l'ester éthylique.

7. Utilisation selon la revendication 1 où le conservateur employé est une solution contenant 0,001 à 5% en poids d'une oléfine de formule (I) ou son sel ou ester.

8. Utilisation selon la revendication 7 ou la solution contient 0,1 à 2% en poids d'un composé de formule (I) ou son sel ou ester.

9. Utilisation selon la revendication 7 ou 8, où le conservateur employé est une solution d'acide propényl phosphonique.

10. Utilisation selon la revendication 9 où le conservateur employé est une solution d'acide *cis*-propénylphosphonique.

F I G. 1

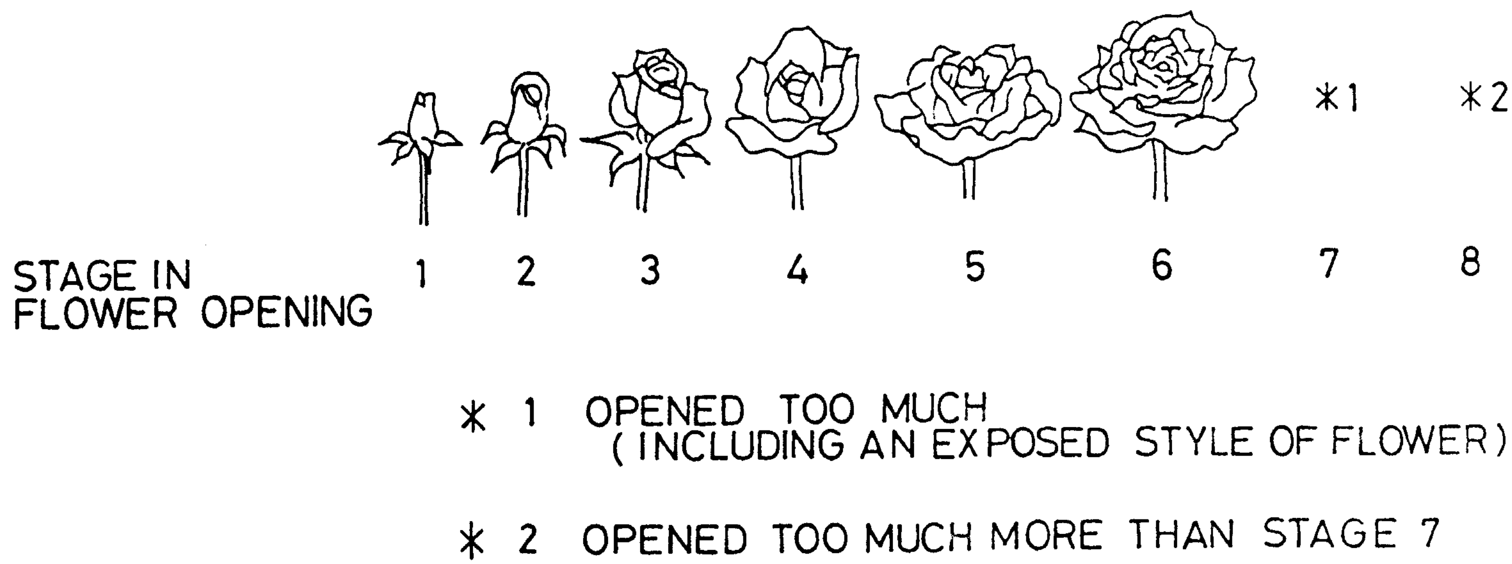
*1
*2
STAGE IN FLOWER OPENING
1
2
3
4
5
6
7
8
* 1 OPENED TOO MUCH (INCLUDING AN EXPOSED STYLE OF FLOWER)
* 2 OPENED TOO MUCH MORE THAN STAGE 7

FIG. 2

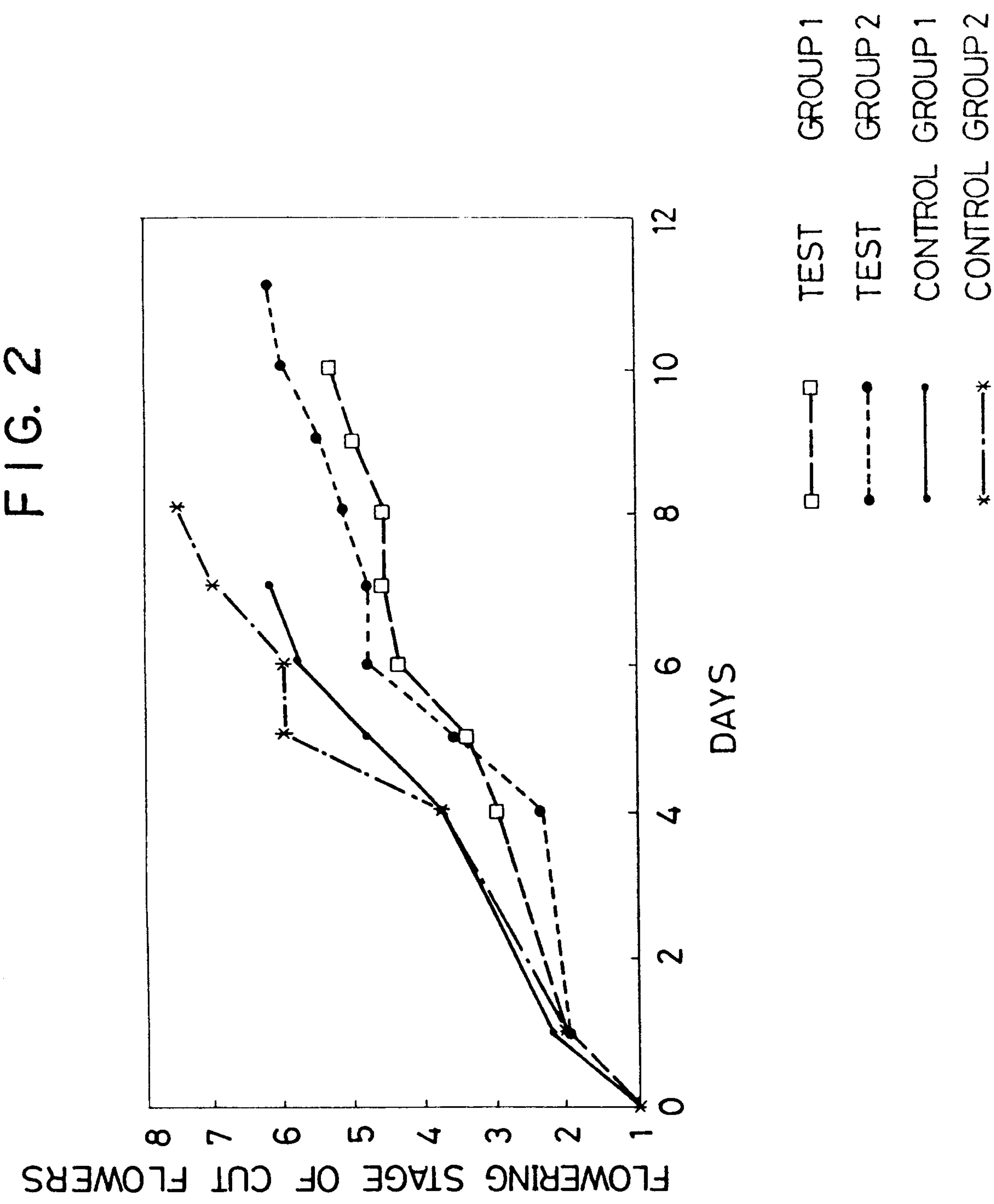
FLOWERING STAGE OF CUT FLOWERS
1
2
3
4
5
6
7
8
0
2
4
6
8
10
12
DAYS
TEST GROUP 1
TEST GROUP 2
CONTROL GROUP 1
CONTROL GROUP 2

FIG. 3

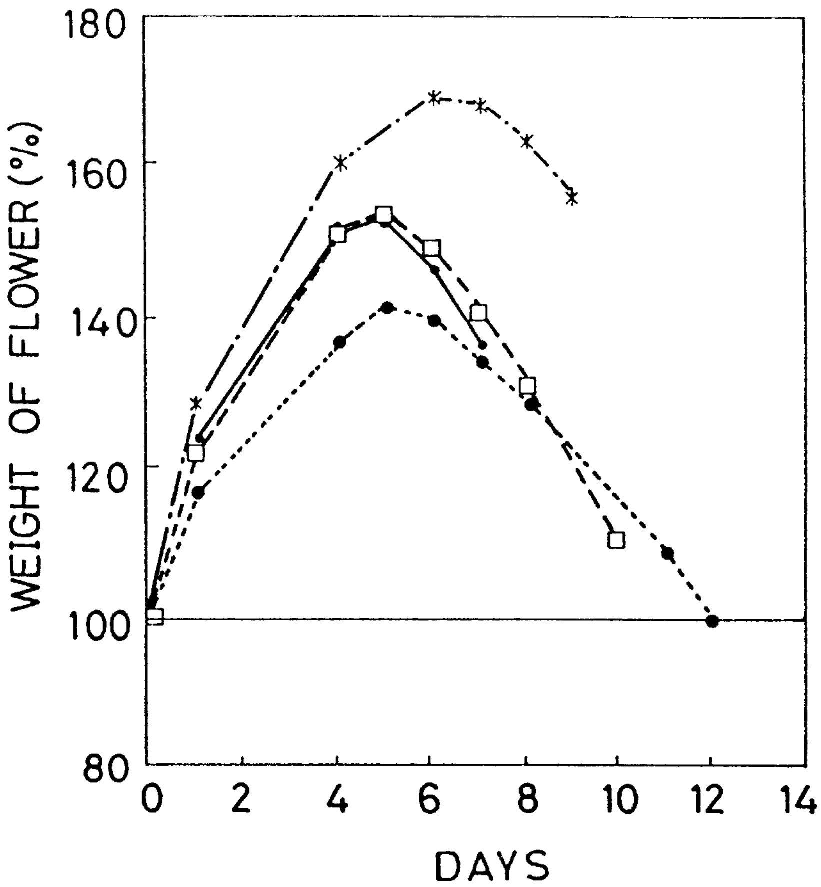


TEST GROUP 1
TEST GROUP 2
CONTROL GROUP 1
CONTROL GROUP 2

FIG. 4

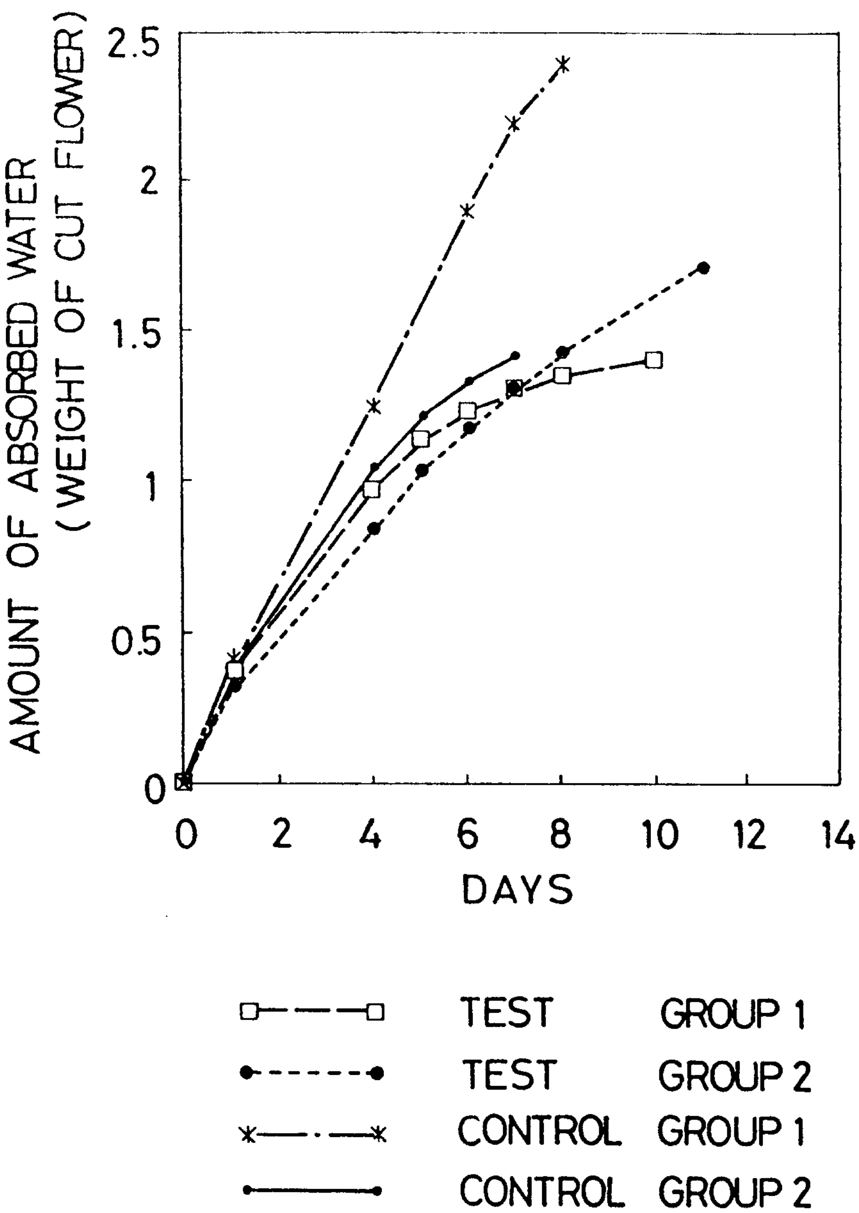
AMOUNT OF ABSORBED WATER
(WEIGHT OF CUT FLOWER)
2.5
2
1.5
1
0.5
0
0
2
4
6
8
10
12
14
DAYS
TEST GROUP 1
TEST GROUP 2
CONTROL GROUP 1
CONTROL GROUP 2

FIG. 5

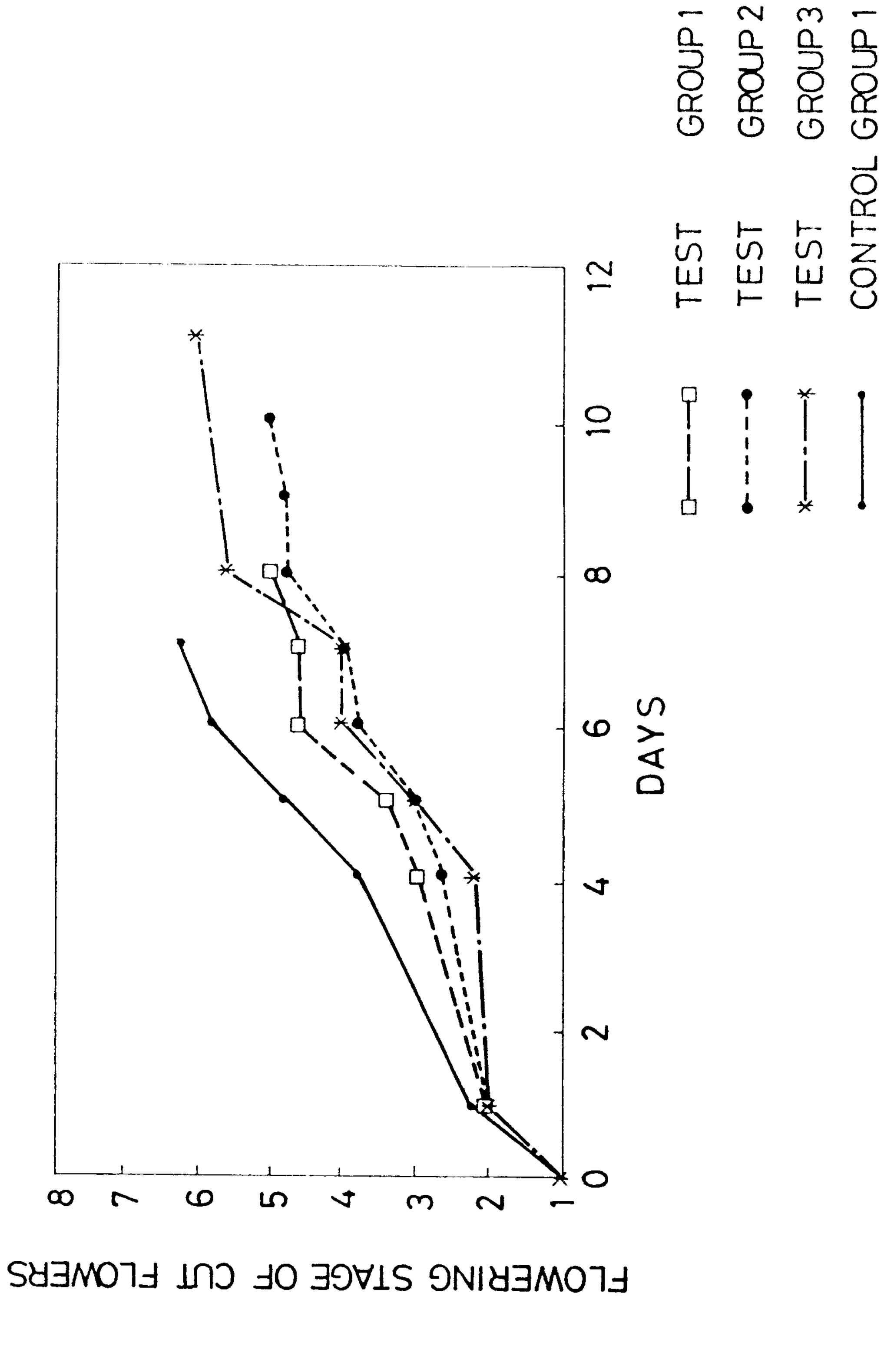
FLOWERING STAGE OF CUT FLOWERS
DAYS
1
2
3
4
5
6
7
8
0
2
4
6
8
10
12
TEST GROUP 1
TEST GROUP 2
TEST GROUP 3
CONTROL GROUP 1

FIG. 6

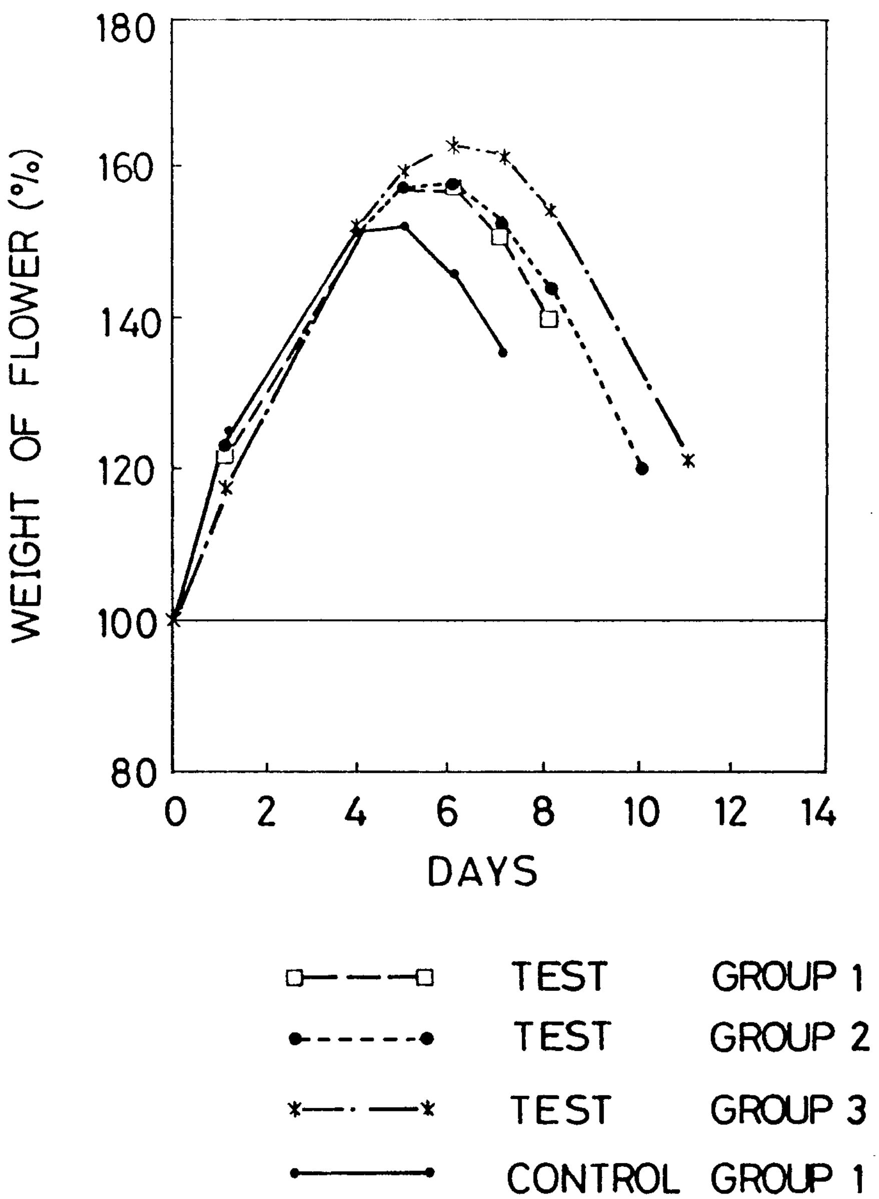
WEIGHT OF FLOWER (%)
180
160
140
120
100
80
0
2
4
6
8
10
12
14
DAYS
TEST GROUP 1
TEST GROUP 2
TEST GROUP 3
CONTROL GROUP 1

FIG. 7

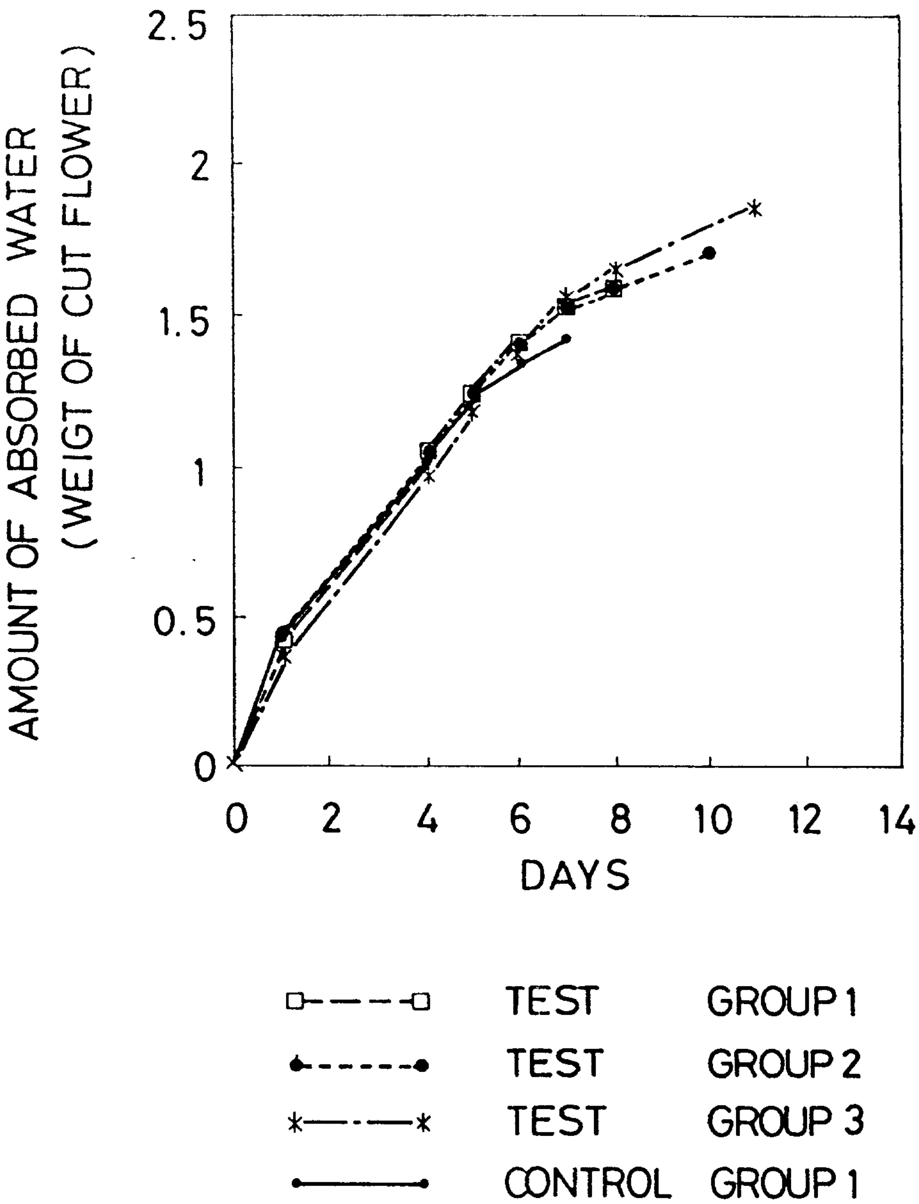
AMOUNT OF ABSORBED WATER
(WEIGT OF CUT FLOWER)
2.5
2
1.5
1
0.5
0
0
2
4
6
8
10
12
14
DAYS
TEST GROUP 1
TEST GROUP 2
TEST GROUP 3
CONTROL GROUP 1

FIG. 8

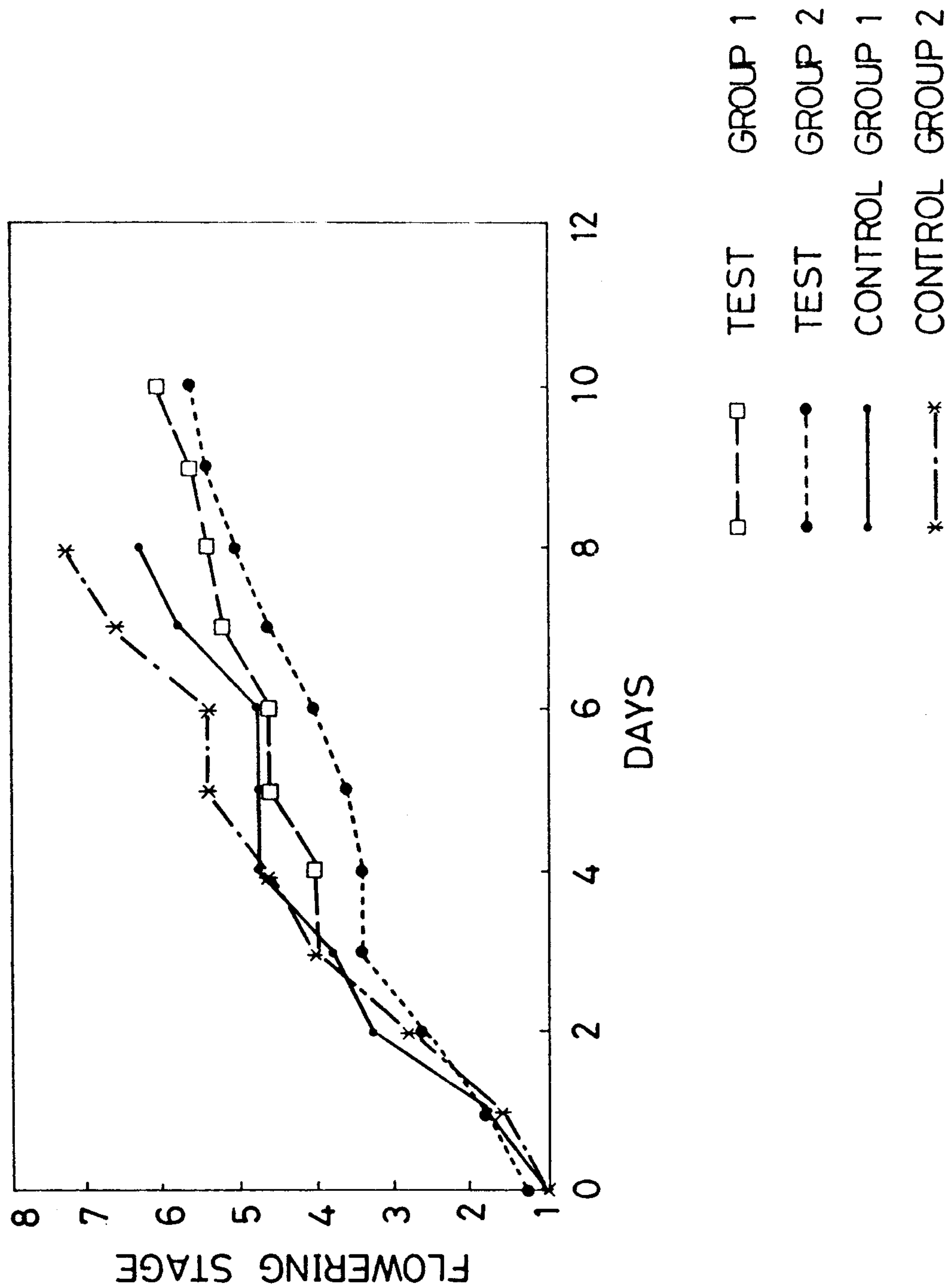
FLOWERING STAGE
1
2
3
4
5
6
7
8
DAYS
0
2
4
6
8
10
12
TEST GROUP 1
TEST GROUP 2
CONTROL GROUP 1
CONTROL GROUP 2

FIG. 9

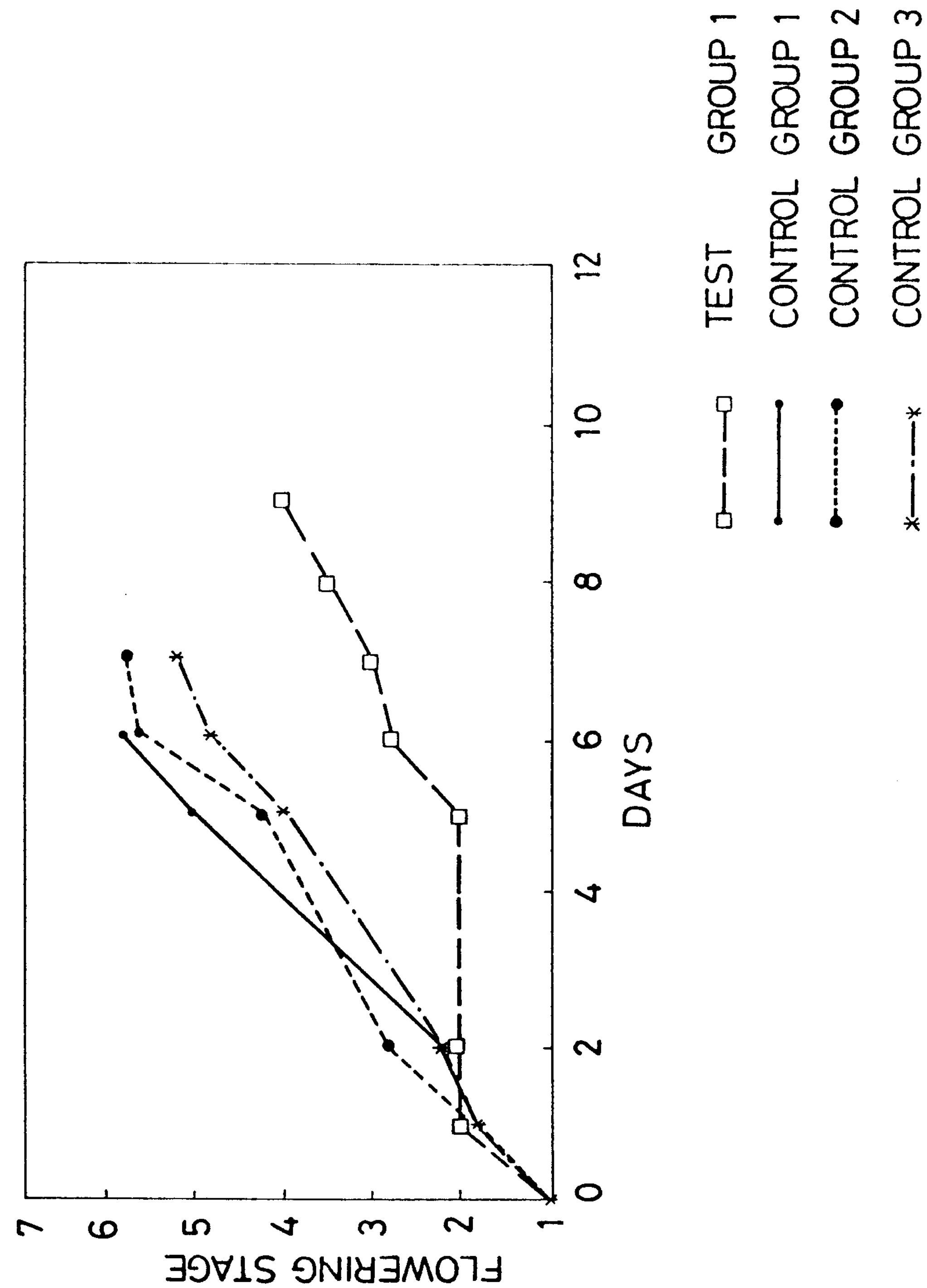
FLOWERING STAGE
1
2
3
4
5
6
7
DAYS
0
2
4
6
8
10
12
TEST GROUP 1
CONTROL GROUP 1
CONTROL GROUP 2
CONTROL GROUP 3

F I G. 10

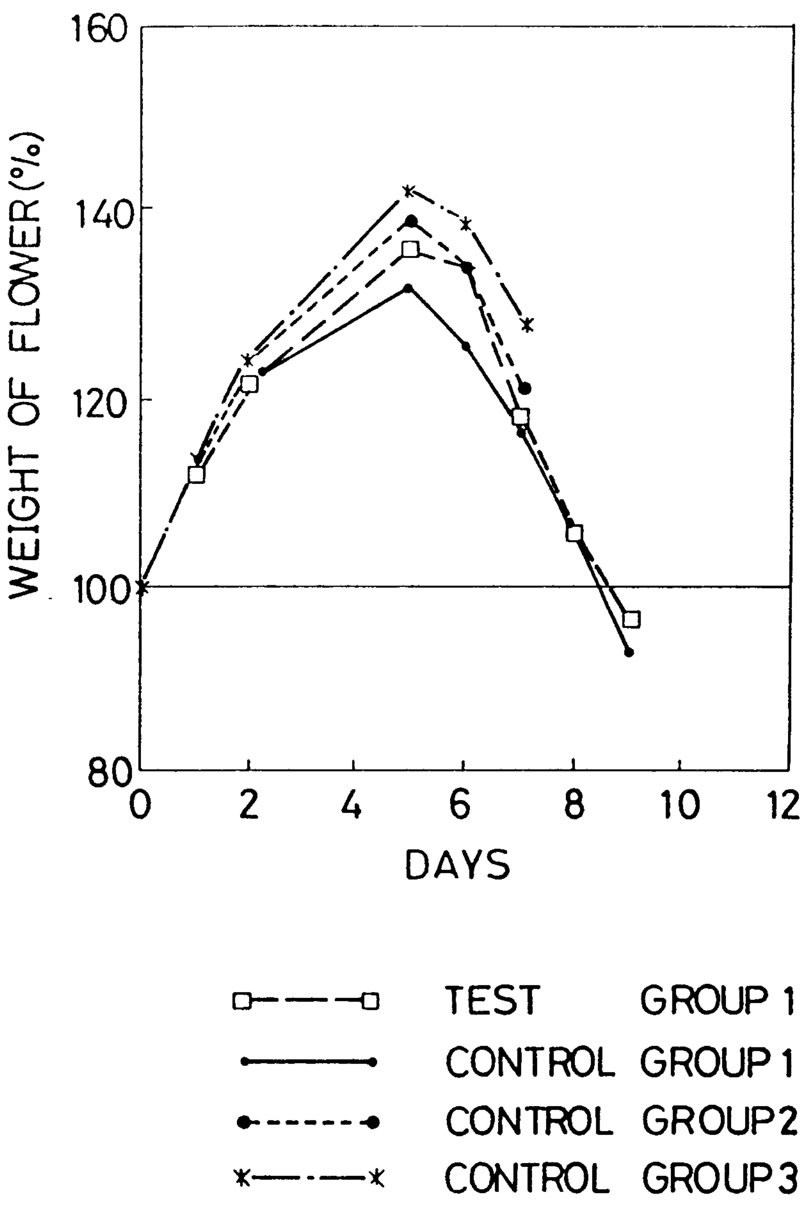
WEIGHT OF FLOWER (%)
160
140
120
100
80
0
2
4
6
8
10
12
DAYS
TEST GROUP 1
CONTROL GROUP 1
CONTROL GROUP 2
CONTROL GROUP 3